(19) Europäisches Patentamt
European Patent Office
Office européen des brevets

(11) Veröffentlichungsnummer: **0 294 319 B1**

(12) **EUROPÄISCHE PATENTSCHRIFT**

(45) Veröffentlichungstag der Patentschrift: **07.01.93**

(51) Int. Cl.5: **F24J 2/26**, F24J 2/32, F25B 27/00

(21) Anmeldenummer: **88730129.9**

(22) Anmeldetag: **02.06.88**

# (54) Vorrichtung zur Erzeugung von Wärme und Kälte mit Hilfe eines Solarkollektors.

(30) Priorität: **03.06.87 DE 3718982**

(43) Veröffentlichungstag der Anmeldung: **07.12.88 Patentblatt 88/49**

(45) Bekanntmachung des Hinweises auf die Patenterteilung: **07.01.93 Patentblatt 93/01**

(84) Benannte Vertragsstaaten: **DE ES FR GR IT**

(56) Entgegenhaltungen:
**DE-A- 2 639 825**
**US-A- 4 625 711**

(73) Patentinhaber: **Benz, Michael**
**Bautzener Strasse 3**
**W-1000 Berlin 62(DE)**

(72) Erfinder: **Lüdke, Josef, Dr.**
**Meyenburgerstr. 49**
**W-2800 Bremen, 21(DE)**
Erfinder: **Benz, Michael**
**Bautzenerstr. 3**
**W-1000 Berlin 62(DE)**

**EP 0 294 319 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Erzeugung von Wärme und Kälte, mit einem flexiblen Solarkollektor, bestehend aus einem flexiblen, in ein Kollektorgehäuse hermetisch eingeschlossen Solarabsorber, wobei der Solarabsorber aus miteinander komunizierend verbundenen Wärmeträgerkanälen besteht, die wärmeleitend mit einer wärmeleitenden Beschichtung abgedeckt sind.

Auf dem Gebiet der Sonnenergienutzung, spez. bei Warmwasserkollektoren, gibt es eine Unzahl verschiedensten Kollektorausführungen. Es gibt Metall- und Kunststoffkonstruktionen, mit Ein-, Zwei- und Dreischeibenisolierung. Trotz der schier unübersehbaren Anzahl an Solarkollektorausführungen ist deren Verbreitung mehr als dürftig. Schuld an der geringen Anwendungsbreite ist der geringe Wirkungsgrad und die hohen Gestehungskosten. Es gibt zur Zeit keine wirtschaftlichen Sonnenenergieanlagen auf dem Markt. Die Rentabilität und somit ein volkswirtschaftlicher Nutzen sind nicht gegeben.

Ein sehr wichtiger Anwendungsbereich der Sonnenenergie ist bisher überhaupt nicht berücksichtigt worden und zwar die Erzeugung von Kälteenergie. Die Sonnenenergie ist vor allem in sonnenenergiereichen Ländern von großer Bedeutung, doch in diesen Ländern ist nicht nur die Bereitung von warmem Brauchwasser oder die Raumbeheizung wichtig, in diesen Ländern ist eine Kühlung für die verschiedensten Anwendungsgebiete, wie z. B.: Klimaanlagen oder Kühlung von Lageräumen usw. von sehr großer Bedeutung. Man begreift dieses Phänomen erst, wenn man bedenkt, das zur Erzeugung von Kälte oder Wärme die gleiche Energiemenge aufgewendet werden muß.

Aus der US-A-4 625 711 ist ein Sonnenkollektor bekannt, der aus einem Kunststoffgehäuse bsteht, in welchem ein Solarabsorber eingeschlossen ist. Dieser Solarabsorber besteht aus miteinander verbundenen, mit einem Wärmeträgermedium gefüllten Kanälen, die mit einer wärmeleitenden Beschichtung abgedeckt sind. Eine solche Vorrichtung ist jedoch nur zur Erwärmung des Wärmeträgermediums geeignet, nicht aber zum Kühlen.

Die Aufgabe der vorliegenden Erfindung besteht in der Schaffung eines bifunktionellen Solarkollektors, mit welchem man einen Wärmeträger sowohl erwärmen als auch abkühlen kann.

Gelöst wird diese Aufgabe dadurch, daß das Kollektorgehäuse den Solarabsorber mit seitlichem Abstand einschließt und einen Hohlraum zur Aufnahme des Verdunstungsmediums aufweist und daß die Absorbtionsschicht schwarz und mikroporös ist. Durch diese Maßnahmen wird ein Solarabsorber geschaffen, mit dem durch die Verdunstung des Wärmeträgermediums in den Wärmeträgerkanälen Kälte erzeugt werden kann. Im Falle einer Anwendung zum Zwecke der Brauchwassererwärmung, ist die Erreichung von 60 bis 80 ° C und bei einer Kühlung eine Temperatur von - 15 bis -20 ° C durchaus erreichbar und von großer wirtschaftlicher Bedeutung.

Weitere vorteilhafte Maßnahmen sind in den Unteransprüchen beschrieben. Die Erfindung ist anhand zweier Ausführungsbeispiele in den beiliegenden Zeichnungen dargestellt und wird nachfolgend näher beschrieben; es zeigt :

- Figur 1 einen bifunktionellen Solarkollektor mit Wärmeträgerkanälen (4) in Seitenansicht;
- Figur 2 den bifunktionellen Solarkollektor nach Figur 1 in Draufsicht;
- Figur 3 einen bifunktionellen Solarkollektor im Schnitt entlang der Linie I-I in der Figur 1;
- Figur 4 einen bifunktionellen Solarkollektor mit einem Schwarzabsorber (15) in Seitenansicht;
- Figur 5 einen bifunktionellen Solarkollektor nach Figur 4, in Draufsicht;
- Figur 6 einen bifunktionellen Solarkollektor im Schnitt entlang der Linie II-II in der Figur 4;
- Figur 7 die Deteildarstellung der Wärmeträgerkanäle (4), überdeckt mit einer Absorptionsschicht (3) bei der Funktion als Wärmkollektor nach Figur 1;
- Figur 8 die Deteildarstellung der Wärmeträgerkanäle (4), überdeckt mit einer Absorptionsschicht (3), bei der Funktion als Kühlkollektor nach Figur 1;
- Figur 9 die Deteildarstellung des Arbeitskreislaufes bei der Funktion als Kühlkollektor, zwischen den Wärmeträgerkanälen (4), der Absorptionsschicht (3), dem Kunststoffhohlrahmen (9) und dem Verdunstungsmedium nach Figur 1.

Die dargestellten Ausführungsbeispiele unterscheiden sich durch eine vereinfachte Ausbildung der Wärmeträgerkanäle (4). Diese werden als Schwarzabsorber (15) ausgeführt. Die Ausführungsvariante mit Schwarzabsorber ist einfacher zu produzieren und nur für waagerechte Betriebslage geeignet.

Zwei weitere Ausführungsvarianten unterscheiden sich lediglich durch eine flachere Gehäuseform, das Überdecken der Absorptionsschicht (3) mit einer Luftkammerisolierung (5), das Fehlen des Kunststoffhohlrahmens (9) und des zur Diffusionskühlung benötigten Verdunstungsmediums (14). Diese Ausführungsvarianten sind nur für die Bereitung von Warmwasser geeignet.

A. Anwendungslall, Herstellung von Kühlenergie:

Das Funktionsprinzip basiert auf der Diffusionskühlung durch Verdampfen des Verdunstungsmediums

(14) und dadurch einen Wärmeentzug des in der Absorptionsschicht (3) befindlichen Wärmeträgers. Die Zufuhr des zur Verdampfung bestimmten Verdunstungsmediums (14) erfolgt selbsttätig mit Hilfe der Kapilarwirkung, der Absorptionsschicht (3). Die mit Verdunstungsmedium (14) durchtränkte Absorptionsschicht (3) wird durch die Akkumulation der Sonnenenergie erwärmt und folglich das sich an der Oberfläche befindliche Verdunstungsmedium (14) verdampft.

Durch die Verdampfung hervorgerufener Dampf wird an der Gehäuseinnenseite bis unter den Taupunkt abgekühlt und kondensiert, um anschließend von den Seitenwänden in den dafür bestimmten Kunststoffhohlrahmen (9) zu fliessen. Aus dem Kunststoffhohlrahmen (9) gelangt das Verdunstungsmedium (14) durch Kapilarkräfte wieder auf die Oberfläche der Absorptionsschicht (3).

Um das Eindringen der Feuchtigkeit in die Bodenisoliermatte (7) zu verhindern, wurde die Bodenisoliermatte (7) in eine luft- und dampfdichte Kunststoffhülle (6) eingeschweißt.

B. Anwendungsfall, Herstellung von Wärmeenergie.

Soll der bifunktionelle, flexible Vollkunststoff-Solarkollektor vom Kühl- auf Wärmbetrieb umgestellt werden, so wird durch Ablassen des für die Verdunstungskühlung bestimmten Verdunstungsmediums (14) und Ausdampfung des Verdunstungsmediums (14) durch die im Kollektorgehäuse (2) befindliche Entlüftungsöffnung (12), die Voraussetzung für den Wärmbetrieb geschaffen. Die von der Absorptionsschicht (3) aufgenommene Sonnenenergie geht auf den Wärmeträger im Inneren der Wärmeträgerkanäle (4) über.

C. Nutzung der Ausführungsvarianten mit flacher Gehäuseform, ohne Kunststoffhohlrahmen (9) und ohne Verdunstungsmedium (14), des flexiblen Vollkunststoff-Solarkollektors.

Diese Ausführungsvarianten des erfindungsgemäßen Solarkollektors sind dadurch gekennzeichnet,daß in einem flachen, UV-stabilisierten Kunststoffgehäuse sich entweder Wärmeträgerkanäle (4) oder ein Schwarzabsorber (15) in einer Umgüllung aus Luftkammerisolierung (5) befinden und gleichzeitig auf einer,in eine Kunststoffhülle (16) eingeschweißten Bodenisoliermatte (7),gelagert sind.

Diese Ausführungsversionen sind besonders durch geringes Eigengewicht, hervorragende Wärmeisolierung und gute Apsorptionseigenschaften für solare Globalstrahlung gekennzeichnet.

Beschreibung der Arbeitsweise des erfindungsgemäßen,bifunktionellen flexiblen Vollkunststoff-Solarkollektors für die Erzeugung von Kühlenergie.

Die Funktionsweise der Vorrichtung soll an Hand der Zeichnung Figur 3. erläutert werden:

Die mit einem Wärmeträger gefüllten Wärmeträgerkanäle (4) sind mit einer Absorptionsschicht (3) bis zum unteren Kollektorrand, in welchem sich das Verdunstungsmedium (14) befindet, bedeckt. Das Verdunstungsmedium (14) wird durch die Kapillarkräfte der Absorptionsschicht (3) über deren gesamte Oberfläche verteilt. Die solare Globalstrahlungsenergie durchdringt die Kunststoffolie (18) des erfindungsgemäßen Solarkollektors und den sich darunter befindlichen Dampf,erreicht die Oberfläche der Absorptionsschicht (3) und wird dort akkumuliert. Durch die Erwärmung der Absorptionsschicht (3) wird auch das auf der Oberfläche der Absorptionsschicht(3) befindliche Verdunstungsmedium (14) verdampft.Die zur Verdampfung nötige Energie wird dem gesamten System entzogen, wodurch sich der in den Wärmeträgerkanälen (4) befindliche Wärmeträger abkühlt. Der durch den Diffusionsverdampfungsvorgang erzeugte Dampf kühlt durch die Temperaturdifferenz zwischen Dampftemperatur und Außentemperatur ab und kondensiert an der Kunststoffolie (18). Von dort aus gelangen Tropfen entweder wieder auf die Absorptionsschicht (3) oder in den Kunststoffhohlrahmen (9).

Da sich aber am Kollektorboden ständig Verdunstungsmedium (14) befindet, welches durch Eindringen in die Bodenisoliermatte (7) unerwünschte Energieverluste verursachen würde, ist die Bodenisoliermatte (7) in eine Kunststoffhülle (6) hermetisch eingeschweißt.

Die praktische Anwendung des bifunktionellen, flexiblen Vollkunststoff-Solarkollektors ist in sonnenreichen Ländern, für die Klimatisierung von Wohn- und Betriebsräumen schon dadurch von großer Bedeutung, daß man die erfindungsgemäßen Solarkollektoren an vorhandene Heizkörper (unter Umgehung von Wärmespeichern, in Bypaßschaltung) direkt anschließen kann.

An Hand der Zeichnungen wird die theoretische Wirkungsweise des erfindungsgemäßen Solarkollektors erläutert.

Es bedeutet:

Figur 7. Anwendungsfall, Herstellung von Wärmeenergie:

$E_s$ = Einfallende solare Globalstrahlungsenergie
$T_1$ = Außentemperatur °C
$T_2$ = Temperatur des Wärmeträgers
$\alpha_1$ = Wärmeübergangskoeffizient Heißwasser-Luft
$\alpha_2$ = Wärmeübergangskoeffizient Luft-Luft
$\lambda$ = Wärmeleitfähigkeit Wärmeträgerkanäle(4) mit Absorptionsschicht (3)

k = Wärmedurchgangskoeffizient

$\alpha_s$ = Absorptionsgrad der Wärmeträgerkanäle (4) mit Absorptionsschicht (3)

Die Energieausbeute hängt von der vorhandenen Energiemenge der solaren Globalstrahlungsenergie, der Absorptionsfähigkeit der Wärmeträgerkanäle (4) mit Absorptionsschicht (3) und der Isolierung des gesamten Systems gegen Wärmeverluste ab.

Figur 8. Anwendungsfall, Herstellung von Kühlenergie:

$E_{s1}$ = Einfallende solare Globalstrahlungsenergie, in $kW/m^2$ 1 $kW/m^2$

$T_3$ = Wärmeträgertemperatur, in °C -15°C

$T_4$ = Dampftemperatur, in °C 90°C

$T_5$ = Außentemperatur, in °C 30°C

$\alpha_3$ = Wärmeübergangskoeffizient Wasser-Wasserdampf in $W/m^2K$ $11600 W/m^2K$

$\alpha_4$ = Wärmeübergangskoeffizient Wasserdampf-Luft in $W/m^2K$ $9{,}04 W/m^2K$

$\lambda_1$ = Wärmeleitfähigkeit Wärmeträgerkanäle (4) mit Absorptionsschicht (3) in W/mK 0,69W/mK

$\lambda_2$ = Wärmeleitfähigkeit Kunststoffolie (18) in W/m K 0,17W/m K

h = Kapilarität der Absorptionsschicht (3) in m

$k_1$ = Wärmedurchgangskoeffizient Kunststoffolie (18) in $W/m^2K$

Der Kühleffekt eines Verdampfungskühlers ist einzig von der Kondensationsfähigkeit des gebildeten Dampfes durch die Außenluft abhängig. Selbst wenn die zur Verfügung stehende Energie wesentlich höher ist, kann die Kühlung des Wärmeträgers im Inneren der Wärmeträgerkanäle (4) nicht höher als die zur Kondensation des Dampfes zur Verfügung stehende Wärmedurchgangsenergie sein. Diese Energiemenge entspricht dem Wärmedurchgangskoeffizienten $k_1$.

Der Wärmedurchgangskoeffizient der Kunststoffolie (18) ist:

$$\frac{1}{K_1} = \frac{1}{\alpha_3} + \frac{1}{\alpha_4} + \frac{s}{\lambda_2} = \frac{1m^2K}{11600W} + \frac{1m^2K}{9{,}04W} + \frac{0{,}0002m}{0{,}17W/mK}$$

$$k_1 = 8{,}94 W/m^2K$$

Da A = 1,3m² pro m² Kollektorfläche ist,berechnet sich der der Wärmestrom wie folgt:

$Q = A \times k_1 \times T_4 - T_5 = 1{,}3m^2 \times 8{,}94W/m^2K \times 60K = 697{,}32W$

Die somit erreichbarre Kühlleistung pro $m^2$ Solarkollektor: 697,32W = 599kcal/h, der erreichbare thermische Wirkungsgrad: 697 : 1000 = 69,7%.

Die Bedeutung der mit einer mikroporösen Absorptionsschicht (3) versehenen Wärmeträgerkanäle (4) liegt vor allem in einer ohne zusätzliche Energie betriebenen Förderung der zur Benetzung des Diffusionverdampfers benötigten Flüssigkeit. Die maximal erreichbare Förderhöhe des Verdunstungsmediums (14) ist:

$$h = \frac{2\,\sigma}{g \cdot p \cdot r}$$

wobei

- h = Steighöhe in Metern
- δ = Oberflächenspannung in N/m
- g = Fallbeschleunigung 9,80665 $m/s^2$
- p = Dichte in $kgm^3$
- r = Radius der Kapillaren in Meter

bedeuten.

Bei Verwendung hochkapillarer Schichtstoffe und Flüssigkeiten mit einer geringen Viskosität können Förderhöhen von bis zu 3m ohne Schwierigkeit erreicht werden. Dies bedeutet aber, daß für die Förderung des Verdunstungsmediums (14) weder Pumpen noch Pumpenenergie benötigt werden.
Die Nutzung der Kapillarsaugkräfte und der Verdampfungs-Verdunstungskühlung machen den besonderen technischen Wert der erfindungsgemäßen Vorrichtung aus.

**Patentansprüche**

1. Vorrichtung zur Erzeugung von Wärme und Kälte, mit einem Sollarkollektor, bestehend aus einem flexiblen, in einem Kollektorgehäuse (2) aus Kunststoff eingeschlossenen Solarabsorber, der aus miteinander verbundenen Wärmeträgerkanälen (4) besteht, die wärmeleitend von einer Absorptionsschicht (3) abgedeckt sind, dadurch gekennzeichnet, daß das Kollektorgehäuse (2) den Solarabsorber mit seitlichem Abstand einschließt und einen Hohlraum zur Aufnahme des Verdunstungsmediums (14) aufweist und daß die Apsorptionsschicht (3) schwarz und mikroporös ist.

2. Vorrichtung nach Anspruch 1 dadurch gekennzeichnet, daß die Wärmeträgerkanäle (4) auf einer in eine Kunststoffhülle (16) eingeschweißten Bodenisoliermatte angeordnet sind.

3. Vorrichtung nach den Ansprüchen 1 und 2, dadurch gekennzeichnet, daß der Absorptionsschicht (3) eine gegen UV-Licht beständige und strahlendurchlässige Luftkammerisolierung (5) zugeordnet ist.

4. Vorrichtung nach den Ansprüchen 1 bis 3, dadurch gekennzeichnet, daß das Kollektorgehäuse (2) mit einer verschließbaren Entlüftungsöffnung (12) versehen ist.

5. Vorrichtung nach den Ansprüchen 1 bis 4, dadurch gekennzeichnet, daß das Kollektorgehäuse (2) einen Hohlprofilrahmen (1) aufweist.

6. Vorrichtung nach dem Anspruch 5, dadurch gekennzeichnet, daß das Kollektorgehäuse (2) eine über den Hohlprofilrahmen (1) gespannte Kunststoffolie (18) aufweist.

**Claims**

1. Device for the production of heat and cold comprising a solar collector which consists of a flexible solar absorber housed in a collector casing (2) of plastic, the solar absorber consisting of interconnected heat carrier ducts (4) covered by an absorption layer (3) in a heat-conducting manner, characterized in that the collector casing (2) encloses the solar absorber with a certain distance forming a void in which the evaporation agent is stored (14), and in that the absorption layer (3) is black and microporous.

**2.** Device in accordance with Claim 1, characterized in that the heat carrier ducts (4) are arranged on a insulating floor mat heat-sealed in a plastic envelope (16).

**3.** Device in accordance with Claims 1 and 2, characterized in that the absorption layer (3) is provided with a UV-resistant and radiolucent insulating honeycomb sheet (5).

**4.** Device in accordance with Claims 1 to 3, characterized in that the collector casing (2) is provided with a sealable vent hole (12).

**5.** Device in accordance with Claims 1 to 4, characterized in that the collector casing (2) has a hollow-section frame (1).

**6.** Device in accordance with Claim 5, characterized in that the collector casing (2) is provided with a plastic sheet (18) stretched over the hollow-section frame (1).

**Revendications**

**1.** Dispositif pour la production de chaleur et de froid comprenant un collecteur solaire composé d'un absorbeur solaire flexible qui est entouré d'un boîtier de collecteur (2) en plastique et composé lui de canaux tubulaires pour l'agent caloporteur communiquant entre eux (4), les dits canaux étant recouvert d'une couche absorbante thermoconducteuse (3), caractérisé en ce que le boîtier de collecteur (2) entoure l'absorbeur solaire avec un écart latéral et comporte un espace vide qui sert de récipient au liquide de condensation (14), et en ce que la couche absorbante (3) est noire et microporeuse.

**2.** Dispositif selon revendication 1, caractérisé en ce que les canaux pour l'agent caloporteur (4) sont disposés sur un matelas de fond isolant thermo-soudé dans une enveloppe en plastique (16).

**3.** Dispositif selon les revendications 1 et 2, caractérisé en ce qu'un isolant alvéolaire (5) résistant à la lumière UV et perméable aux rayons est adjoint à la couche absorbante (3).

**4.** Dispositif selon les revendications 1 à 3, caractérisé en ce que le boîtier de collecteur (2) dispose d'une ouverture d'aération (12) obturable.

**5.** Dispositif selon les revendications 1 à 4, caractérisé en ce que le boîtier de collecteur (2) dispose d'un bâti en profilés creux (1).

**6.** Dispositif selon la revendication 5, caractérisé en ce que le boîtier de collecteur (2) dispose d'une feuille plastique (18) tendue au-dessus du bâti en profilés creux (1).

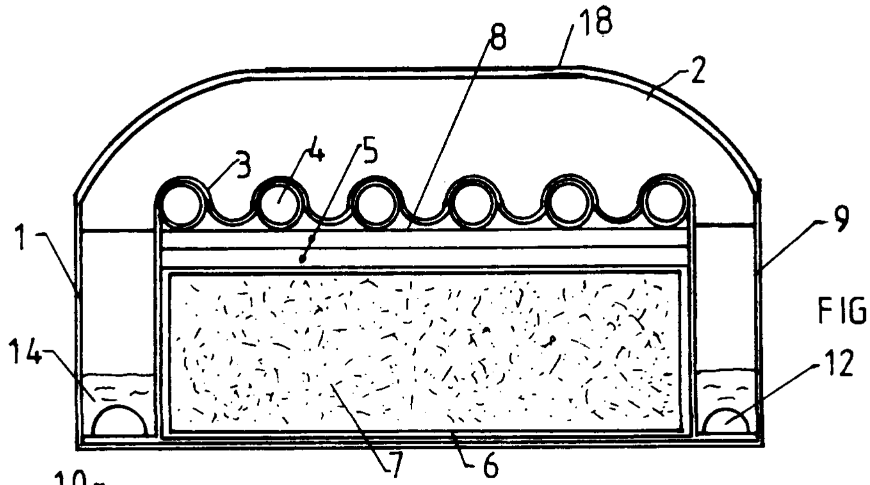


FIG.3

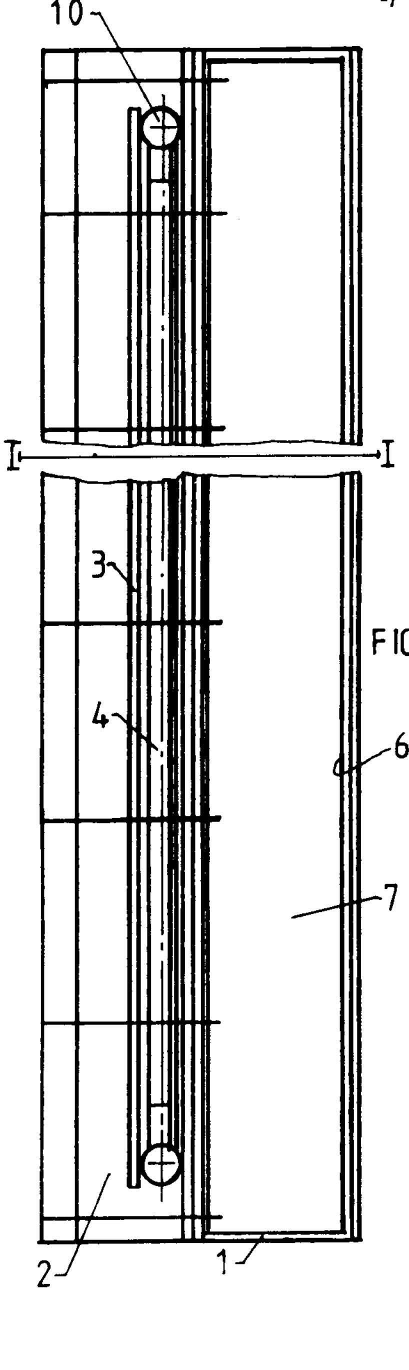


FIG.1

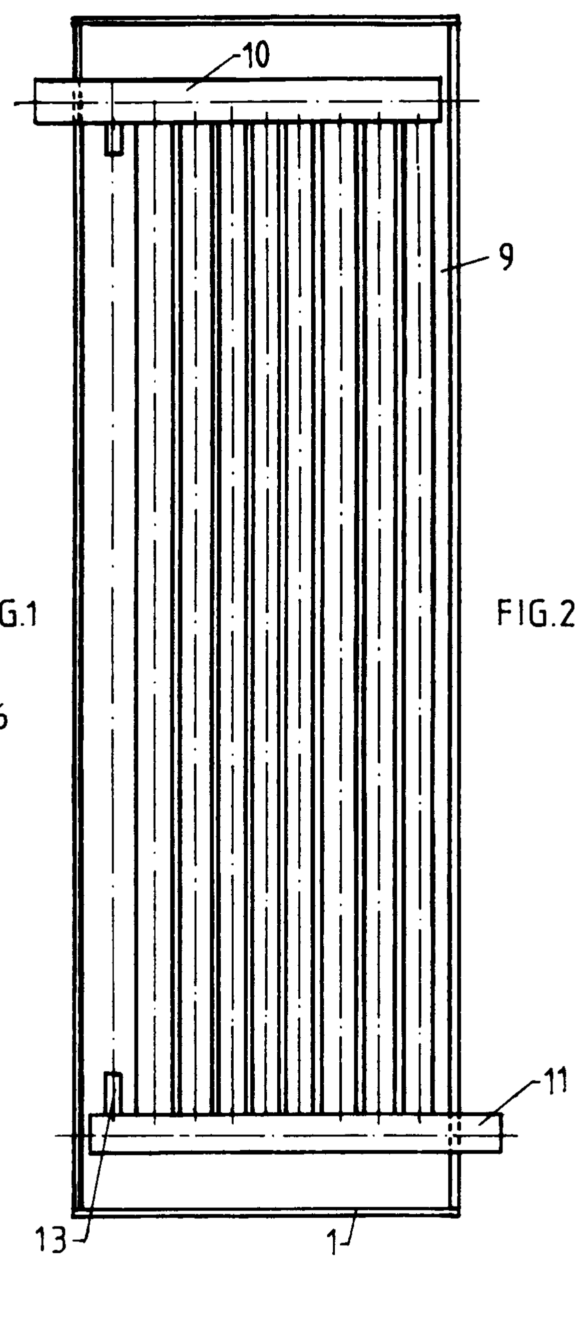


FIG.2

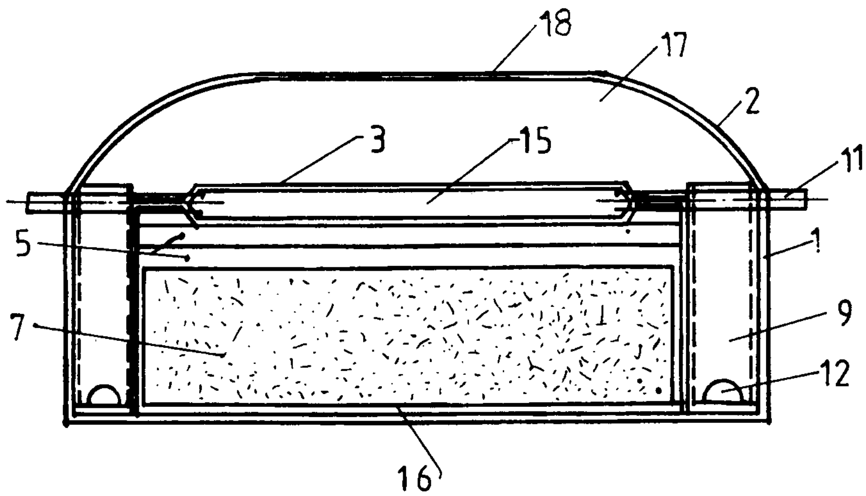


FIG.6

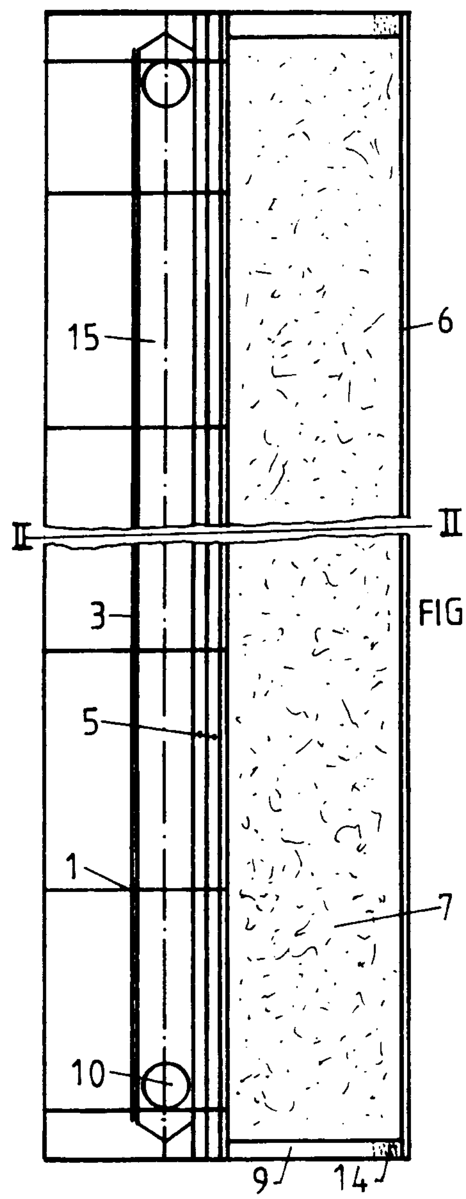


FIG.4

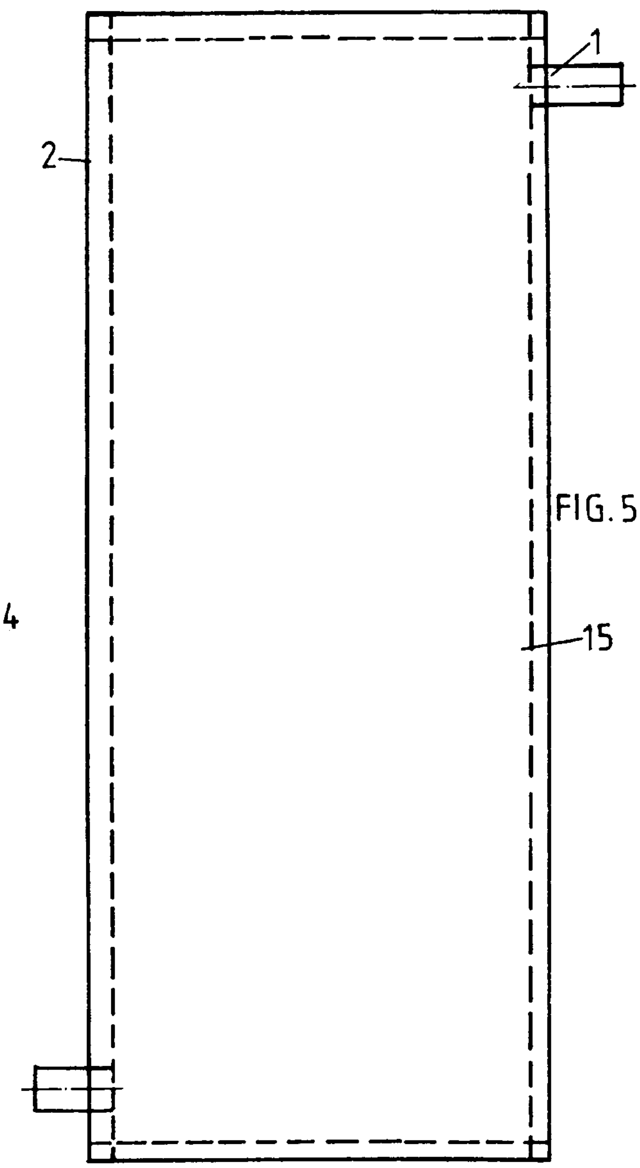


FIG.5

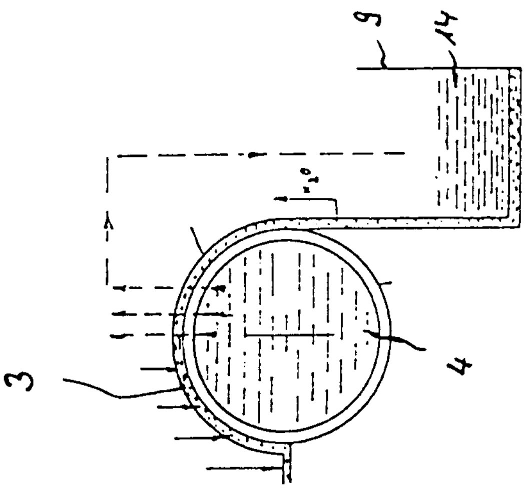


Fig. 9

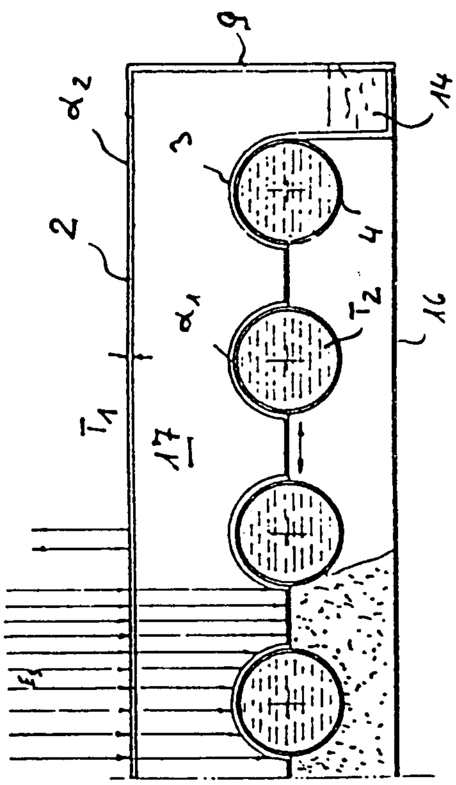


Fig. 7

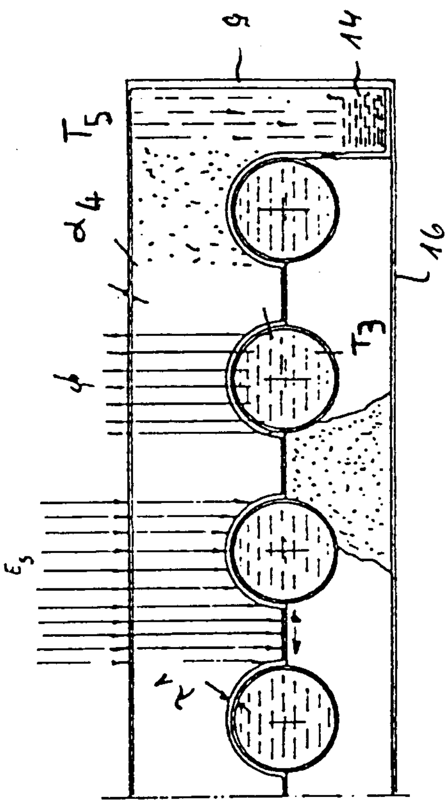


Fig. 8